# EUROPÄISCHE PATENTSCHRIFT

(11) **EP 3 757 451 B1**
(45) Veröffentlichungstag und Bekanntmachung des Hinweises auf die Patenterteilung: **09.08.2023**
(21) Anmeldenummer: 19181991.1
(22) Anmeldetag: 24.06.2019
(51) Int. Cl.: F21S 41/68

(54) **BELEUCHTUNGSVORRICHTUNG FÜR EIN KRAFTFAHRZEUG**
LIGHTING DEVICE FOR A MOTOR VEHICLE
DISPOSITIF D'ÉCLAIRAGE POUR UN VÉHICULE AUTOMOBILE

(43) Veröffentlichungstag der Anmeldung: 30.12.2020
(73) Patentinhaber: ZKW Group GmbH, 3250 Wieselburg (AT)
(72) Erfinder: Knobloch, Christian, 3652 Leiben (AT); Danner, Markus, 2252 Ollersdorf (AT); Reisinger, Bettina, 3300 Amstetten (AT); Pürstinger, Josef, 4540 Bad Hall (AT); Plank, Josef, 3251 Purgstall/Erlauf (AT); Pühringer, Jakob, 3370 Ybbs (AT)
(74) Vertreter: Patentanwaltskanzlei Matschnig & Forsthuber OG

(56) Entgegenhaltungen:
- EP-A2- 0 969 247
- WO-A1-2010/058323
- WO-A1-2017/019725
- DE-A1-102014 213 368
- DE-A1-102018 008 760
- KR-B1- 101 911 932

## Beschreibung

Die Erfindung betrifft eine Beleuchtungsvorrichtung für ein Kraftfahrzeug, welche Beleuchtungsvorrichtung Folgendes umfasst:
- zumindest eine Lichtquelle, welche eingerichtet ist, Lichtstrahlen zu emittieren,
- ein optoelektronisches Bauteil, welches eingerichtet ist, zumindest ein erstes und zumindest ein zweites Lichtbild durch gezielte Umlenkung der Lichtstrahlen der zumindest einen Lichtquelle abzustrahlen und auf ein optisches Linsensystem zu lenken, und
- das optische Linsensystem, welches eingerichtet ist, die von dem optoelektronischen Bauteil abgestrahlten Lichtbilder als Lichtverteilungen vor dem Kraftfahrzeug abzubilden, wobei das zumindest eine erste Lichtbild in einer ersten Schärfeebene vor dem Kraftfahrzeug als erste Lichtverteilung und das zumindest eine zweite Lichtbild in einer zweiten Schärfeebene als zweite Lichtverteilung vor dem Kraftfahrzeug scharf abgebildet wird,

Die Erfindung betrifft weiters einen Kraftfahrzeugscheinwerfer mit zumindest einer erfindungsgemäßen Beleuchtungsvorrichtung.

Die Verfügbarkeit von hochauflösenden Systemen in der Automobilen Beleuchtung zieht vielfach den Wunsch der Projektion von Logos oder Symbolen aus dem Frontscheinwerfer auf verschiedenste Distanzen (Garagenwand, 10m Wand, etc.) nach sich. Üblicherweise kann solchen Anforderungen durch fokussierbare Linsensysteme begegnet werden, welche das Risiko von vielen beweglichen Teilen im Scheinwerfer bergen. Eine Beleuchtungsvorrichtung für ein Kraftfahrzeug ist aus der DE 10 2018 008760 A1 bekannt.

Viele bewegliche Teile sind allerdings nicht von Vorteil, da die Umwelteinflüsse im Fahrzeug das System um einiges stärker beeinflussen als dies beispielsweise für einen Beamer im Wohnzimmer oder eine Fotokamera der Fall ist. Um Umwelteinflüssen wie hohen Temperaturschwankungen (Sommer/Winter, Tag/Nacht) oder starken Stößen (Bodenwelle, Schlaglöcher) gerecht werden zu können, ist es vorteilhaft, eine möglichst robuste Konzeptionierung des optischen Abbildungssystems vorzunehmen. Dadurch kann aber die Schärfe der Abbildung nur auf eine bestimmte Distanz optimiert werden. Dies hat zur Folge, dass Projektionen auf andere Abstände, vor allem sehr nahe am Fahrzeug (z.B. Garagenwand), ein mehr oder weniger verwaschenes Bild ergeben.

Es ist eine Aufgabe der Erfindung eine verbesserte Beleuchtungsvorrichtung bereitzustellen.

Diese Aufgabe wird durch die Merkmale des Anspruchs 1 gelöst.

Der Begriff "Irisblende" bezeichnet in der angewandten Optik eine Blende mit variabler Öffnungsweite, deren Blendenöffnung sich bei feststehendem Mittelpunk so verändern lässt, dass sie im Wesentlichen (ungefähr) kreisförmig bleibt. Ferner umfasst eine Irisblende mehrere Lamellen, die über eine Mechanik gemeinsam nach innen oder außen gedreht werden können; je mehr Lamellen eingesetzt werden, desto besser kann die Öffnung bei der Verstellung einer Kreisform angenähert werden

Eine sogenannte "Lochblende" wird im Zusammenhang mit der Erfindung als nicht variables bzw. veränderbares Loch verstanden und ist nicht mit einer "Irisblende" gleichzusetzen.

Die "Schärfeebene" ist diejenige Ebene im Objektraum, deren Punkte von einer Linse oder einem Objektiv als Punkte auf der Bildebene im Bildraum scharf abgebildet werden. Der Bereich vor und hinter der Schärfeebene, in dem ein Punkt noch hinreichend scharf abgebildet wird, ist die Schärfentiefe.

Die "Schärfentiefe" ist dabei ein Maß für die Ausdehnung des scharfen Bereichs im Objektraum eines abbildenden optischen Systems und beschreibt die Größe des Entfernungsbereichs, innerhalb dessen ein Objekt hinlänglich scharf abgebildet wird.

Der Unterschied zwischen "Lichtbild" und "Lichtverteilung" ist folgendermaßen zu verstehen: unter "Lichtbild" wird verstanden, dass das optoelektronische Bauteile ein abzubildendes Bild erzeugt, beispielsweise eine Abblendlichtverteilung oder ein Logo; erst wenn das erzeugte Lichtbild auf eine Fläche projiziert wird bzw. dort auftrifft, ist von einer "Lichtverteilung" zu sprechen.

Das optoelektronische Bauteil kann beispielsweise als DMD (Digital Micromirror Device) ausgebildet sein.

Ein DMD ist eine variabel ansteuerbare Reflektorfläche, welche aus einer Mehrzahl von Mikrospiegeln gebildet ist, welche von Lichtstrahlen einer Lichtquelle bestrahlt werden, wobei die Reflektorfläche die reflektierten Lichtstrahlen auf das optische Linsensystem gelenkt bzw. reflektiert werden.

Dabei sind beliebige Lichtverteilungen realisierbar, wie beispielsweise eine Abblendlicht-Lichtverteilung, eine Stadtlicht-Lichtverteilung, eine Fernlicht-Lichtverteilung oder die Abbildung von blendfreiem Fernlicht. Weiters können auch Symbolprojektionen erfolgen, wie zum Beispiel Gefahrensymbole, Navigationspfeile, Herstellerlogos oder Ähnliches.

Für die Mikrospiegelanordnung kommt vorzugsweise die sogenannte "Digital Light Processing"-Projektionstechnik - kurz DLP genannt - zum Einsatz, bei der Bilder dadurch erzeugt werden, dass ein digitales Bild auf einen Lichtstrahl aufmoduliert wird. Dabei wird durch eine rechteckige Anordnung von beweglichen Mikrospiegeln, auch als Pixel bezeichnet, der Lichtstrahl in Teilbereiche zerlegt und anschließend pixelweise entweder in den Projektionsweg hinein oder aus dem Projektionsweg hinaus reflektiert bzw. umgelenkt.

Bei einem DMD-Mikrosystem handelt es sich um einen Flächenlichtmodulator, der aus matrixförmige angeordneten Mikrospiegelaktoren, d.h. verkippbaren bzw. verschwenkbaren spiegelnden Flächen besteht, beispielsweise mit einer Kantenlänge von etwa 7 µm. Die Spiegelflächen sind derart konstruiert, dass sie durch die Einwirkung elektrostatischer Felder beweglich sind.

Jeder Mikrospiegel ist im Winkel einzeln verstellbar und weist in der Regel zwei stabile Endzustände auf, zwischen denen beispielsweise innerhalb einer Sekunde bis zu 5000 Mal gewechselt werden kann.

Die Anzahl der Mikrospiegel entspricht der Auflösung des projizierten Bildes, wobei ein Mikrospiegel ein oder mehrere Pixel darstellen kann. Mittlerweile sind DMD-Chips mit hohen Auflösungen im Megapixel-Bereich erhältlich.

Es kann vorgesehen sein, dass die erste Lichtverteilung eine Abblendlicht-Lichtverteilung und/oder eine Fernlicht-Lichtverteilung ist.

Es kann vorgesehen sein, dass die eine zweite Lichtverteilung ein Logo bzw. Herstellerlogo ist.

Es kann vorgesehen sein, dass die Blendenöffnung im ersten Blendenöffnungszustand größer ist als im zweiten Blendenöffnungszustand.

Es kann vorgesehen sein, dass der zweite Schärfentiefebereich größer ist als der erste Schärfentiefebereich.

Es ist erfindungsgemäß vorgesehen, dass die erste Schärfeebene identisch mit der zweiten Schärfeebene ist.

Es kann vorgesehen sein, dass das zweite Lichtbild in einem Abstand von 3 bis 10 m, vorzugsweise 4 bis 9 m, zur Beleuchtungsvorrichtung scharf abbildbar ist.

Es kann vorgesehen sein, dass die erste Schärfeebene in einem Abstand von 25 m von der Beleuchtungsvorrichtung entfernt liegt.

Es ist erfindungsgemäß vorgesehen, dass die Steuerungseinrichtung mit der zumindest einen Lichtquelle, dem optoelektronischen Bauteil und der Irisblende verbunden ist und eingerichtet ist, Ansteuerdaten zu empfangen und die zumindest eine Lichtquelle, das optoelektronische Bauteil und die Irisblende in Abhängigkeit der empfangenen Ansteuerdaten anzusteuern.

Als Ansteuerdaten werden beispielsweise Zustände von Bedienelementen, beispielsweise Schalter, einer Fernbedienung und/oder Sensoren verstanden. Die Ansteuerdaten enthalten beispielsweise Informationen darüber, welche Blendenöffnung vorgesehen ist.

Es ist erfindungsgemäß vorgesehen, dass die Beleuchtungsvorrichtung eine Sensoreinrichtung umfasst, welche eingerichtet ist, den Abstand der Beleuchtungsvorrichtung zu einer Fläche, welche zur Projektion des zumindest einen zweiten Lichtbildes vorgesehen ist, zu erfassen und den erfassten Abstand an die Steuereinrichtung zu übermitteln, welche Steuereinrichtung die Irisblende entsprechend den von der Sensoreinrichtung übermittelten Abstand ansteuert, sodass das zumindest zweite Lichtbild an der Fläche scharf abbildbar ist.

Die Aufgabe wird ebenso durch einen Kraftfahrzeugscheinwerfer gelöst, welcher zumindest eine erfindungsgemäße Beleuchtungsvorrichtung umfasst.

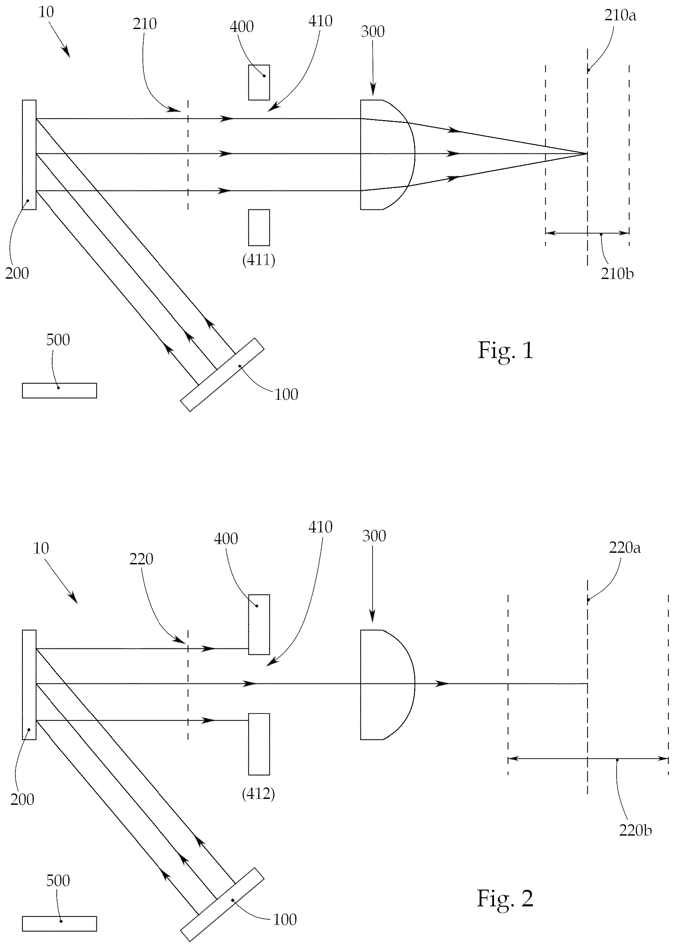

Nachfolgend wird die Erfindung anhand von beispielhaften Zeichnungen näher erläutert. Hierbei zeigt
Fig. 1 eine beispielhafte Beleuchtungsvorrichtung mit einem optoelektronischen Bauteil, welches mittels Lichtstrahlen einer Lichtquelle ein erstes Lichtbild auf ein optisches Linsensystem lenkt, und einer Irisblende mit einer Blendenöffnung, welche sich in einem ersten Blendenöffnungszustand befindet, und
Fig. 2 eine beispielhafte Beleuchtungsvorrichtung mit einem optoelektronischen Bauteil, welches mittels Lichtstrahlen einer Lichtquelle ein zweites Lichtbild auf ein optisches Linsensystem lenkt, und einer Irisblende mit einer Blendenöffnung, welche sich in einem zweiten Blendenöffnungszustand befindet.

**Fig. 1** und **Fig. 2** zeigen eine Beleuchtungsvorrichtung **10** für ein Kraftfahrzeug, welche Beleuchtungsvorrichtung **10** eine Lichtquelle **100,** welche eingerichtet ist, Lichtstrahlen zu emittieren, und ein optoelektronisches Bauteil **200** umfasst, welches eingerichtet ist, ein erstes und ein zweites Lichtbild **210, 220** durch gezielte Umlenkung der Lichtstrahlen der zumindest einen Lichtquelle **100** abzustrahlen und auf ein optisches Linsensystem **300** zu lenken.

Das erste Lichtbild **210** entspricht beispielsweise einer Abblendlicht-Lichtverteilung und/oder einer Fernlicht-Lichtverteilung.

Das zweite Lichtbild **220** entspricht beispielweise einem Logo bzw. Herstellerlogo.

Ferner umfasst die Beleuchtungsvorrichtung **10** das optische Linsensystem **300,** welches eingerichtet ist, die von dem optoelektronischen Bauteil **200** abgestrahlten Lichtbilder **210, 220** vor dem Kraftfahrzeug abzubilden, wobei das erste Lichtbild **210** in einer ersten Schärfeebene **210a** und das zweite Lichtbild **220** in einer zweiten Schärfeebene **220a** vor dem Kraftfahrzeug scharf abgebildet wird.

Die Beleuchtungsvorrichtung **10** umfasst ferner eine Irisblende **400,** welche zwischen dem optoelektronischen Bauteil **200,** welches in den Figuren gezeigten Beispiel als DMD (Digital Micromirror Device) ausgebildet ist, und dem optischen Linsensystem **300** zwischengeschalten ist und eine in der Größe verstellbare Blendenöffnung **410** aufweist, wobei die Irisblende **400** einen ersten und einen zweiten Blendenöffnungszustand **411, 412** aufweisen kann, wobei die Blendenöffnung **410** im ersten Blendenöffnungszustand **411** größer ist als im zweiten Blendenöffnungszustand **412.**

Die Beleuchtungsvorrichtung **10** umfasst ferner eine Steuerungseinrichtung **500** zur Manipulation der Blendenöffnung **410,** wobei sich die Irisblende **400** zur Abbildung des ersten Lichtbildes **210** im ersten Blendenöffnungszustand **411** befindet und ein erster Schärfentiefebereich **210b** um die erste Schärfeebene **210a** ausgebildet ist, was in **Fig. 1** dargestellt ist, und wobei sich die Irisblende **400** zur Abbildung des zweiten Lichtbildes **220** im zweiten Blendenöffnungszustand **412** befindet und ein zweiter Schärfentiefebereich **220b** um die zweite Schärfeebene **220a** ausgebildet ist, was in **Fig. 2** dargestellt ist. In dem gezeigten Beispiel ist die erste Schärfeebene **210a** identisch mit der zweiten Schärfeebene 220a hinsichtlich ihrer Lage bzw. Position. Die erste Schärfeebene **210a** kann beispielsweise zur Abbildung des ersten Lichtbildes bzw. der Abblendlicht-Lichtverteilung in einem Abstand von 25 m von der Beleuchtungsvorrichtung 10 entfernt liegen.

Wie in den Figuren ersichtlich ist, ist der zweite Schärfentiefebereich **220b** größer ist als der erste Schärfentiefebereich **210b,** wobei der vergrößerte zweite Schärfetiefenbereich **220b** durch die verkleinerte Blendenöffnung **410** im zweiten Blendenöffnungszustand **412** verursacht wird.

Zur Manipulation der Blendenöffnung ist es vorgesehen, dass die Steuerungseinrichtung **500** mit der zumindest einen Lichtquelle **100,** dem optoelektronischen Bauteil **200** und der Irisblende **400** verbunden ist und eingerichtet ist, Ansteuerdaten zu empfangen und die zumindest eine Lichtquelle **100,** das optoelektronische Bauteil **200** und die Irisblende **400** in Abhängigkeit der empfangenen Ansteuerdaten anzusteuern.

Solche Ansteuerdaten können beispielsweise durch eine Sensoreinrichtung zur Verfügung gestellt werden. Dabei umfasst die Beleuchtungsvorrichtung **10** beispielsweise eine Sensoreinrichtung, welche eingerichtet ist, den Abstand der Beleuchtungsvorrichtung **10** zu einer Fläche, welche zur Projektion des zumindest einen zweiten Lichtbildes **220** vorgesehen ist, zu erfassen und den erfassten Abstand an die Steuereinrichtung **500** zu übermitteln, welche Steuereinrichtung **500** die Irisblende **400** entsprechend den von der Sensoreinrichtung übermittelten Abstand ansteuert, sodass das zumindest eine zweite Lichtbild **220** an der Fläche scharf abbildbar ist.

Eine solche Fläche ist beispielsweise in einem Abstand von 3 bis 10 m, vorzugsweise 4 bis 9 m, zur Beleuchtungsvorrichtung **10** beabstandet, wobei das zweite Lichtbild auf diese Fläche scharf abbildbar, d.h. dass die zweite Schärfeebene **220a** an der zuvor genannten Fläche positioniert ist und/oder diese Fläche innerhalb des zweiten Schärfentiefebereichs **220b** liegt.

### BEZUGSZEICHENLISTE

| | |
|---|---|
| Beleuchtungsvorrichtung | 10 |
| Lichtquelle | 100 |
| Optoelektronisches Bauteil | 200 |
| Erstes Lichtbild | 210 |
| Erste Schärfeebene | 210a |
| Erster Schärfentiefebereich | 210b |
| Zweites Lichtbild | 220 |
| Zweite Schärfeebene | 220a |
| Zweiter Schärfentiefebereich | 220b |
| Optisches Linsensystem | 300 |
| Irisblende | 400 |
| Blendenöffnung | 410 |
| Erster Blendenöffnungszustand | 411 |
| Zweiter Blendenöffnungszustand | 412 |
| Steuerungseinrichtung | 500 |

## Patentansprüche

1. Beleuchtungsvorrichtung (10) für ein Kraftfahrzeug, welche Beleuchtungsvorrichtung (10) Folgendes umfasst:
- zumindest eine Lichtquelle (100), welche eingerichtet ist, Lichtstrahlen zu emittieren,
- ein optoelektronisches Bauteil (200), welches eingerichtet ist, zumindest ein erstes und zumindest ein zweites Lichtbild (210, 220) durch gezielte Umlenkung der Lichtstrahlen der zumindest einen Lichtquelle (100) abzustrahlen und auf ein optisches Linsensystem (300) zu lenken, und
- das optische Linsensystem (300), welches eingerichtet ist, die von dem optoelektronischen Bauteil (200) abgestrahlten Lichtbilder (210, 220) als Lichtverteilungen vor dem Kraftfahrzeug abzubilden, wobei das zumindest eine erste Lichtbild (210) in einer ersten Schärfeebene (210a) vor dem Kraftfahrzeug als erste Lichtverteilung und das zumindest eine zweite Lichtbild (220) in einer zweiten Schärfeebene (220a) als zweite Lichtverteilung vor dem Kraftfahrzeug scharf abgebildet wird,
wobei
die Beleuchtungsvorrichtung (10) eine Irisblende (400) umfasst, welche eine in der Größe verstellbare Blendenöffnung (410) aufweist, wobei die Irisblende (400) einen ersten und zumindest einen zweiten Blendenöffnungszustand (411, 412) aufweisen kann, wobei die Blendenöffnung (410) im zumindest einen ersten und im zumindest einen zweiten Blendenöffnungszustand (411, 412) jeweils eine unterschiedliche Größe aufweist, **dadurch gekennzeichnet, dass** die Irisblende (400) zwischen dem optoelektronischen Bauteil (200) und dem optischen Linsensystem (300) zwischengeschalten ist, und wobei
die Beleuchtungsvorrichtung (10) eine Steuerungseinrichtung (500) zur Manipulation der Blendenöffnung (410) umfasst, wobei sich die Irisblende (400) zur Abbildung des zumindest einen ersten Lichtbildes (210) im zumindest einen ersten Blendenöffnungszustand (411) befindet und ein erster Schärfentiefebereich (210b) um die erste Schärfeebene (210a) ausgebildet ist, und wobei sich die Irisblende (400) zur Abbildung des zumindest einen zweiten Lichtbildes (220) im zumindest einen zweiten Blendenöffnungszustand (412) befindet und ein zweiter Schärfentiefebereich (220b) um die zweite Schärfeebene (220a) ausgebildet ist, wobei die erste Schärfeebene (210a) identisch mit der zweiten Schärfeebene (220a) ist, und wobei
die Steuerungseinrichtung (500) mit der zumindest einen Lichtquelle (100), dem optoelektronischen Bauteil (200) und der Irisblende (400) verbunden ist und eingerichtet ist, Ansteuerdaten zu empfangen und die zumindest eine Lichtquelle (100), das optoelektronische Bauteil (200) und die Irisblende (400) in Abhängigkeit der empfangenen Ansteuerdaten anzusteuern, wobei
die Beleuchtungsvorrichtung (10) eine Sensoreinrichtung umfasst, welche eingerichtet ist, den Abstand der Beleuchtungsvorrichtung (10) zu einer Fläche, welche zur Projektion des zumindest einen zweiten Lichtbildes (220) vorgesehen ist, zu erfassen und den erfassten Abstand an die Steuerungseinrichtung (500) zu übermitteln, welche Steuerungseinrichtung (500) die Irisblende (400) entsprechend den von der Sensoreinrichtung übermittelten Abstand ansteuert, sodass das zumindest eine zweite Lichtbild (220) an der Fläche scharf abbildbar ist.

2. Beleuchtungsvorrichtung nach Anspruch 1, **dadurch gekennzeichnet, dass** die erste Lichtverteilung eine Abblendlicht-Lichtverteilung und/oder eine Fernlicht-Lichtverteilung ist.

3. Beleuchtungsvorrichtung nach Anspruch 1 oder 2, **dadurch gekennzeichnet, dass** die eine zweite Lichtverteilung ein Logo ist.

4. Beleuchtungsvorrichtung nach einem der Ansprüche 1 bis 3, **dadurch gekennzeichnet, dass** die Blendenöffnung (410) im ersten Blendenöffnungszustand (411) größer ist als im zweiten Blendenöffnungszustand (412).

5. Beleuchtungsvorrichtung nach einem der Ansprüche 1 bis 4, **dadurch gekennzeichnet, dass** der zweite Schärfentiefebereich (220b) größer ist als der erste Schärfentiefebereich (210b).

6. Beleuchtungsvorrichtung nach einem der Ansprüche 1 bis 5, **dadurch gekennzeichnet, dass** das zweite Lichtbild (220) in einem Abstand von 3 bis 10 m, vorzugsweise 4 bis 9 m, zur Beleuchtungsvorrichtung (10) scharf abbildbar ist.

7. Beleuchtungsvorrichtung nach einem der Ansprüche 1 bis 5
**dadurch gekennzeichnet,**
**dass** die erste Schärfeebene (210a) in einem Abstand von 25 m von der Beleuchtungsvorrichtung (10) entfernt liegt.

8. Kraftfahrzeugscheinwerfer mit zumindest einer Beleuchtungsvorrichtung nach einem der Ansprüche 1 bis 7.

## Claims

1. A lighting device (10) for a motor vehicle, which lighting device (10) comprises:
- at least one light source (100) which is arranged to emit light beams,
- an optoelectronic component (200) which is set up to emit at least one first and at least one second light image (210, 220) by selective deflection of the light beams of the at least one light source (100) and to direct them onto an optical lens system (300), and
- the optical lens system (300), which is set up to image the light images (210, 220) emitted by the optoelectronic component (200) as light distributions in front of the motor vehicle, the at least one first light image (210) being sharply imaged in a first plane of focus (210a) in front of the motor vehicle as a first light distribution and the at least one second light image (220) being sharply imaged in a second plane of focus (220a) as a second light distribution in front of the motor vehicle,
wherein
the illumination device (10) comprises an iris diaphragm (400) which has a diaphragm opening (410) which can be adjusted in size, it being possible for the iris diaphragm (400) to have a first and at least one second diaphragm opening state (411, 412), the diaphragm opening (410) having a different size in each case in the at least one first and in the at least one second diaphragm opening state (411, 412)
**characterized in that**,
the iris diaphragm (400) is interposed between the optoelectronic component (200) and the optical lens system (300), and wherein
the illumination device (10) comprises a control device (500) for manipulating the iris diaphragm (410), wherein the iris diaphragm (400) for imaging the at least one first light image (210) is in the at least one first iris diaphragm opening state (411) and a first depth -of-field region (210b) is formed around the first plane of focus (210a) and wherein the iris diaphragm (400) for imaging the at least one second light image (220) is located in the at least one second iris opening state (412) and a second depth of field region (220b) is formed around the second focal plane (220a), wherein the first focal plane (210a) is identical to the second focal plane (220a), and wherein
the control device (500) is connected to the at least one light source (100), the optoelectronic component (200) and the iris diaphragm (400) and is set up to receive drive data and to drive the at least one light source (100), the optoelectronic component (200) and the iris diaphragm (400) as a function of the received drive data, wherein
the illumination device (10) comprises a sensor device which is set up to detect the distance of the illumination device (10) from a surface which is provided for the projection of the at least one second light image (220) and to transmit the detected distance to the control device (500), which control device (500) controls the iris diaphragm (400) in accordance with the distance transmitted by the sensor device, so that the at least one second light image (220) can be sharply imaged on the surface.

2. A lighting device according to claim 1, **characterized in that** the first light distribution is a low beam light distribution and/or a high beam light distribution.

3. A lighting device according to claim 1 or 2, **characterized in that** the one second light distribution is a logo.

4. A lighting device according to any one of claims 1 to 3, **characterized in that** the aperture opening (410) is larger in the first aperture opening state (411) than in the second aperture opening state (412).

5. An illumination device according to any one of claims 1 to 4, **characterized in that** the second depth-of-field region (220b) is larger than the first depth-of-field region (210b).

6. An illumination device according to one of claims 1 to 5, **characterized in that** the second light image (220) is sharply imageable at a distance of 3 to 10 m, preferably 4 to 9 m, from the illumination device (10).

7. A lighting device according to any one of claims 1 to 5, **characterized in that** the first plane of focus (210a) is at a distance of 25 m from the lighting device (10).

8. Motor vehicle headlamp with at least one illumination device according to one of the claims 1 to 7.

## Revendications

1. Dispositif d'éclairage (10) pour un véhicule automobile, lequel dispositif d'éclairage (10) comprend :
- au moins une source de lumière (100), qui est adaptée pour émettre des rayons lumineux,
- un composant optoélectronique (200) qui est conçu pour émettre au moins une première et au moins une deuxième image lumineuse (210, 220) par déviation ciblée des rayons lumineux de la au moins une source lumineuse (100) et pour les diriger sur un système de lentilles optiques (300), et
- le système de lentilles optiques (300), qui est conçu pour reproduire les images lumineuses (210, 220) émises par le composant optoélectronique (200) sous forme de répartitions de lumière devant le véhicule automobile, l'au moins une première image lumineuse (210) étant reproduite de manière nette dans un premier plan de netteté (210a) devant le véhicule automobile sous forme de première répartition de lumière et l'au moins une deuxième image lumineuse (220) étant reproduite de manière nette dans un deuxième plan de netteté (220a) sous forme de deuxième répartition de lumière devant le véhicule automobile,
dans lequel
le dispositif d'éclairage (10) comprend un diaphragme à iris (400) qui présente une ouverture de diaphragme (410) réglable en taille, le diaphragme à iris (400) pouvant présenter un premier et au moins un deuxième état d'ouverture de diaphragme (411, 412), l'ouverture de diaphragme (410) présentant dans au moins un premier et au moins un deuxième état d'ouverture de diaphragme (411, 412) respectivement une taille différente,
**caractérisé en ce que**
le diaphragme à iris (400) est intercalé entre le composant optoélectronique (200) et le système de lentilles optiques (300), et dans lequel
le dispositif d'éclairage (10) comprend un dispositif de commande (500) pour la manipulation de l'ouverture du diaphragme (410), le diaphragme iris (400) se trouvant dans au moins un premier état d'ouverture du diaphragme (411) pour la reproduction de l'au moins une première image lumineuse (210) et une première zone de profondeur de champ (210b) étant formée autour du premier plan de netteté (210a), et le diaphragme iris (400) se trouvant dans au moins un deuxième état d'ouverture du diaphragme (412) pour la reproduction de l'au moins une deuxième image lumineuse (220) et une deuxième zone de profondeur de champ (220b) étant formée autour du deuxième plan de netteté (220a), le premier plan de netteté (210a) étant identique au deuxième plan de netteté (220a), et dans lequel
le dispositif de commande (500) est relié à la au moins une source lumineuse (100), au composant optoélectronique (200) et à l'iris (400) et est agencé pour recevoir des données de commande et pour commander la au moins une source lumineuse (100), le composant optoélectronique (200) et l'iris (400) en fonction des données de commande reçues, dans lequel
le dispositif d'éclairage (10) comprend un dispositif de détection qui est conçu pour détecter la distance du dispositif d'éclairage (10) par rapport à une surface qui est prévue pour la projection de la au moins une deuxième image lumineuse (220) et pour transmettre la distance détectée au dispositif de commande (500), lequel dispositif de commande (500) commande le diaphragme à iris (400) en fonction de la distance transmise par le dispositif de détection, de sorte que la au moins une deuxième image lumineuse (220) peut être reproduite de manière nette sur la surface.

2. Dispositif d'éclairage selon la revendication 1, **caractérisé en ce que** la première répartition de lumière est une répartition de lumière de croisement et/ou une répartition de lumière de route.

3. Dispositif d'éclairage selon la revendication 1 ou 2, **caractérisé en ce que** la deuxième distribution lumineuse est un logo.

4. Dispositif d'éclairage selon l'une des revendications 1 à 3, **caractérisé en ce que** l'ouverture du diaphragme (410) est plus grande dans le premier état d'ouverture du diaphragme (411) que dans le deuxième état d'ouverture du diaphragme (412).

5. Dispositif d'éclairage selon l'une des revendications 1 à 4, **caractérisé en ce que** la deuxième zone de profondeur de champ (220b) est plus grande que la première zone de profondeur de champ (210b).

6. Dispositif d'éclairage selon l'une des revendications 1 à 5, **caractérisé en ce que** la deuxième image lumineuse (220) peut être reproduite de manière nette à une distance de 3 à 10 m, de préférence de 4 à 9 m, du dispositif d'éclairage (10).

7. Dispositif d'éclairage selon l'une des revendications 1 à 5, **caractérisé en ce que** le premier plan de netteté (210a) est situé à une distance de 25 m du dispositif d'éclairage (10).

8. Projecteur de véhicule automobile comportant au moins un dispositif d'éclairage selon l'une des revendications 1 à 7.
